# EUROPEAN PATENT SPECIFICATION

(11) **EP 1 716 446 B1**
(45) Date of publication and mention of the grant of the patent: **20.02.2008**
(21) Application number: 05702995.1
(22) Date of filing: 17.02.2005
(51) Int. Cl.: G02B 27/22, H04M 13/00

(54) **OPTICAL PATH LENGTH ADJUSTER**
EINSTELLVORRICHTUNG FÜR DIE OPTISCHE WEGLÄNGE
DISPOSITIF DE REGLAGE DE LA LONGUEUR D'UNE VOIE OPTIQUE

(30) Priority: 21.02.2004 GB 0403933
(43) Date of publication of application: 02.11.2006
(73) Proprietor: Koninklijke Philips Electronics N.V., 5621 BA Eindhoven (NL)
(72) Inventor: BAKKER, L.P., Philips Int. Property&Standards, Redhill Surrey RH1 5HA (GB); SALTERS, Bart A., Philips Int. Prop.&Standards, Redhill Surrey RH1 5HA (GB)
(74) Representative: Damen, Daniel Martijn
(86) International application number: PCT/IB2005/050593
(87) International publication number: WO 2005/081038

(56) References cited:
- WO-A-03/032058
- WO-A-20/04006005
- US-A- 4 670 744
- SERGAN T ET AL: "P-81: Twisted Nematic Reflective Display with Internal Wire Grid Polarizer" SID 02 DIGEST, vol. XXXIII, 2002, pages 514-517, XP007008172
- SUYAMA S ET AL: "THREE-DIMENSIONAL DISPLAY SYSTEM WITH DUAL-FREQUENCY LIQUID-CRYSTALVARIFOCAL LENS" JAPANESE JOURNAL OF APPLIED PHYSICS, PUBLICATION OFFICE JAPANESE JOURNAL OF APPLIED PHYSICS. TOKYO, JP, vol. 39, no. 2A, PART 1, February 2000 (2000-02), pages 480-484, XP001052357 ISSN: 0021-4922

## Description

The present invention relates to methods and apparatus for adjusting an optical path length between two optical elements. In particular, though not exclusively, the invention relates to adjustment of an optical path length within three dimensional display devices that generate a virtual image within a defined imaging volume.

A three-dimensional image can be created in several ways. For instance, in stereoscopic displays two pictures uniquely observable by each of a viewer's eyes can be shown simultaneously or time-multiplexed. The pictures are selected by means of special spectacles or goggles worn by the viewer. In the former case, the spectacles may be equipped with Polaroid lenses. In the latter case, the spectacles may be equipped with electronically controlled shutters. These types of displays are relatively simple to construct and have a low data-rate. However, the use of special viewing spectacles is inconvenient and the lack of motion parallax may result in discomfort among viewers.

A more realistic three-dimensional impression can be created using an auto-stereoscopic display. In these types of display, every pixel emits light with different intensities in different viewing directions. The number of viewing directions should be sufficiently large that each of the viewer's eyes sees a different picture. These types of display show a realistic motion parallax; if the viewer's head moves, the view changes accordingly.

Most of these types of display are technically difficult to realise in practice. Several proposals can be found in the literature, see for instance US 5,969,850. The advantage of these displays is that a number of viewers can watch, e.g. a single 3D television display without special viewing spectacles and each viewer can see a realistic three-dimensional picture including parallax and perspective.

Another type of 3D display is a volumetric display as described at http://www.cs.berkley.edu/jfc/MURI/LC-display. In a volumetric display, points in an image display volume emit light. In this way, an image of a three dimensional object can be created. A disadvantage of this technique is occlusion, i. e. it is not possible to block the light of points that are hidden by other objects. So, every object displayed is transparent. In principle, this problem can be overcome by means of video-processing and possibly tracking of the position of the viewer's head or eyes.

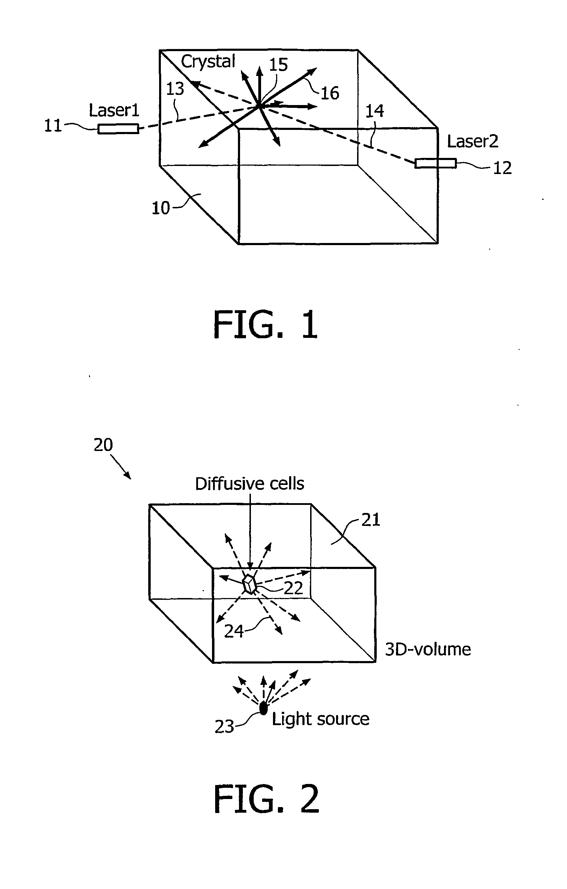

A known embodiment of a volumetric display is shown in figure 1. The display consists of a transparent crystal 10 in which two lasers 11,12 (or more) are scanning. At the position 15 of intersection of the laser beams 13, 14, light 16 may be generated by up-conversion, where photon emission at a higher energy occurs by absorption of multiple photons of lower energy (i. e. from the combined laser beams). This type of display is expensive and complicated. A special crystal 10 and two scanning lasers 11,12 are required. In addition, up-conversion is not a very efficient process.

An alternative embodiment of volumetric display 20 is shown in figure 2.

This arrangement uses a material that can be switched between transparent and diffusive, such as polymer dispersed liquid crystal (PDLC) or liquid crystal gel (LC-gel). In a three-dimensional grid volume 21, cells 22 can be switched between these two states. Typically, the volume 21 is illuminated from one direction. In the illustration, the illumination source 23 is located below the grid volume. If a cell 22 is switched to a diffusive condition, light 24 is scattered in all directions.

US 4 670 744 discloses a 3D display system in which an optical path length is varied. Optical retarders are used to change the polarization of light, and liquid crystal chiral cells are used to provide polarization dependent reflection. By controlling the optical retarders, the location at which reflection takes place can be controlled, thereby adjusting the path length.

One object of the present invention is to provide a volumetric three dimensional image display device that overcomes some or all of the problems associated with prior art devices.

Another object of the present invention is to provide an apparatus suitable for adjusting an optical path length between two optical elements within a volumetric three-dimensional image display device.

A further object of the present invention to provide an optical path length adjuster for varying an optical path length between an input optical path and an output optical path.

Some or all of these objects may be achieved by embodiments of the invention as described herein.

According to one aspect, the present invention provides an optical path length adjuster as defined in claim 1.

According to another aspect, the present invention provides a display device as defined in claim 17, and which usesd the optial path length adjuster of the invention.

According to another aspect, the present invention provides a method for varying an optical path length between an input optical path and an output optical path of an optical path length adjuster, as defined in claim 18.

According to another aspect, the present invention provides a method for generating a three-dimensional volumetric image as defined in claim 30, using the method of the invention for varying an optical path length.

Embodiments of the present invention will now be described by way of example and with reference to the accompanying drawings in which:
Figure 1 shows a perspective schematic view of a volumetric display based on two scanning lasers and an up-conversion crystal;
Figure 2 shows a perspective schematic view of a volumetric display based on switchable cells of polymer dispersed liquid crystal or liquid crystal gel;
Figure 3 is a schematic diagram useful in explaining the principles of a volumetric three-dimensional image display device in which the present invention may usefully be deployed;
Figure 4 is a schematic diagram illustrating volumetric three-dimensional image display devices comprising a display panel and an optical path length adjuster according to the present invention;
Figure 5 is a schematic diagram of a volumetric three-dimensional image display device using an optical path length adjuster between a display panel and a focusing element;
Figure 6 shows a perspective schematic view of an optical path length adjuster according to the present invention;
Figure 7 is a schematic diagram illustrating the three different optical paths of the adjuster of figure 6;
Figure 8 is a schematic diagram of a cascaded optical path length adjuster deploying a combination of the adjusters of figure 6;
Figure 9 is a schematic functional block diagram of a control system for the display device of figure 5.

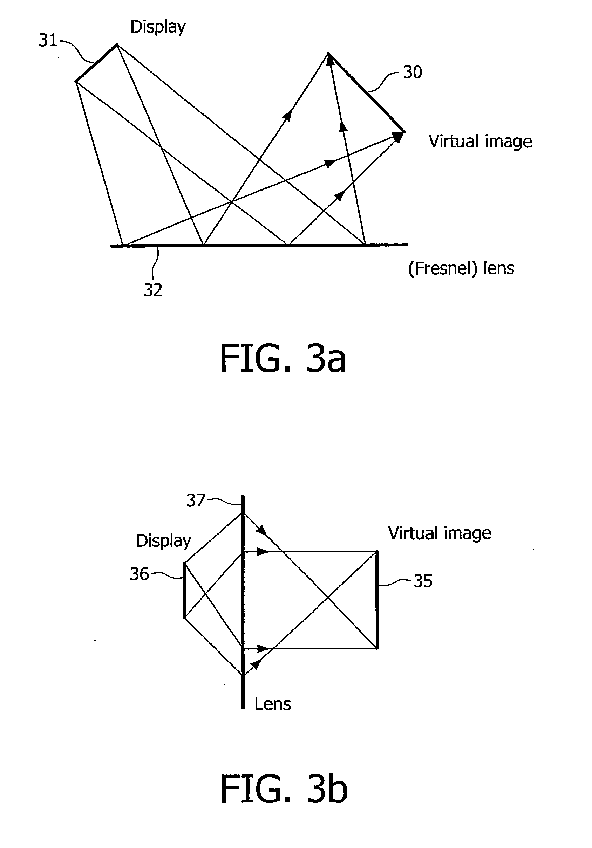

Figures 3a and 3b illustrate some basic principles used in a three-dimensional image display device. In figure 3a, a relatively large virtual image 30 of a small display panel 31 is provided by a Fresnel mirror 32. In figure 3b, a relatively large virtual image 35 of a small display panel 36 is provided by a Fresnel lens 37. The virtual image 30 or 35 appears in the air in front of the lens. A spectator can focus on this image 30 or 35 and observes that it is 'floating' in the air.

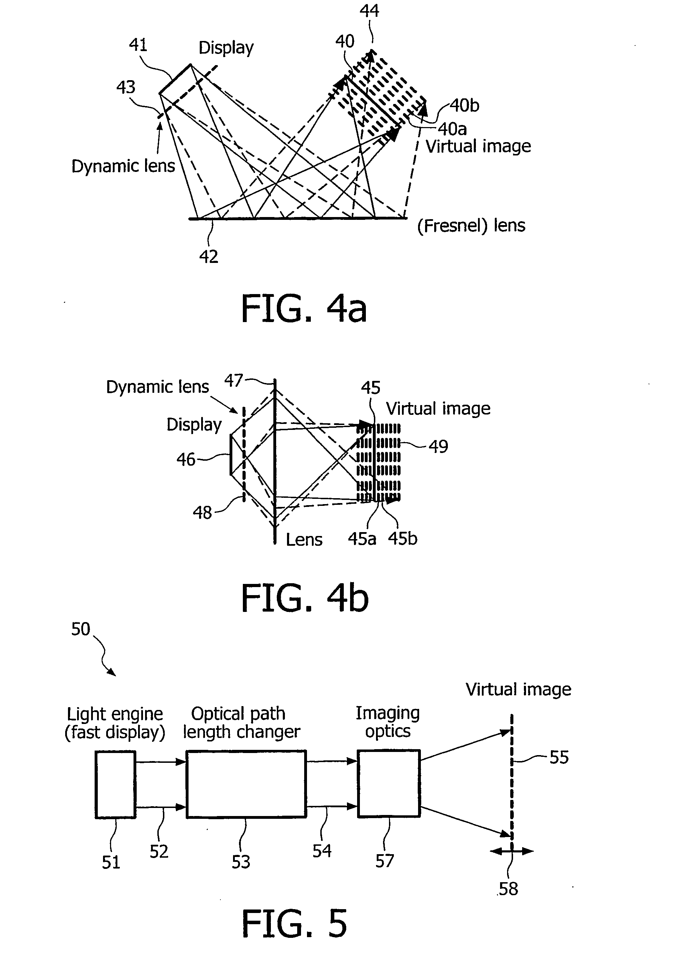

Figures 4a and 4b illustrate a modification to the arrangements of figures 3a and 3b. As shown in figure 4a, the effective optical path length between the display panel 41 and the Fresnel mirror 42 is varied by the provision of a suitable effective path length adjuster 43. Similarly, as shown in figure 4b, the effective optical path length between the display panel 46 and the Fresnel lens 47 is varied by the provision of a suitable effective path length adjuster 48.

In prior arrangements, the effective path length adjuster 43, 48 is a variable strength lens; in another arrangement, the effective path length adjuster is a mechanically-driven device which switches between two or more optical paths by physical movement of one or more optical elements.

The present invention, however, is directed toward electro-optically switching between two or more optical paths thereby avoiding a number of moving parts.

In a general sense, it will be noted that the mirror 42 or lens 47 may generally be replaced or implemented by any optical focusing element for projecting the two dimensional image of the display panel 41, 46 to a virtual image 40 or 45 located within an imaging volume 44 or 49. Preferably, the mirror 42 or lens 47 is a single or compound optical focusing element having a single focal length such that a planar display panel is imaged into a single plane of an imaging volume.

Figure 5 illustrates the basic components of the display device 50 according to the principles of figure 4. A two-dimensional display device or 'light engine' 51 provides an illumination source for imaging at an image plane 55. The light travels along an input optical path 52 to an optical path length adjuster 53, and from the optical path length adjuster 53 via output optical path 54 to a focusing element 57 (e.g. mirror 42 or lens 47) which projects the two dimensional image to plane 55.

Operation of the optical path length adjuster 53 effectively moves the depth position of the image plane 55 as indicated by arrow 58. The path length is preferably adjusted periodically at a 3D image display frame frequency. Typically this would be 50 or 60 Hz. Referring back to figure 4, during one 3D image frame period (e.g. 1/50 sec), the virtual image of the display panel 41 or 46 fills the imaging volume 44 or 49. Within the same frame period, the display panel may be driven to alter the image that is projected, so that different depths within the imaging volume 44 or 49 receive different virtual images.

It will be understood that in a preferred aspect, the path length adjuster 53 is effective to periodically sweep a substantially planar virtual image of the substantially planar two dimensional display panel through the imaging volume 44 or 49 at a 3D frame rate. Within that 3D frame period, the 2D image display panel displays a succession of 2D images at a 2D frame rate substantially higher than the 3D frame rate.

Therefore, at different planes 40a, 40b or 45a, 45b in the imaging volume 40, 45, different images are obtained so that a three-dimensional image of any object can be constructed.

The two-dimensional display panel may be any suitable display device for creating a two dimensional image. For example, this could be a poly-LED display or a projection display based on a digital micromirror device (DMD).

Preferably, the display panel is sufficiently fast to enable the generation of plural 2D images within one frame period of, e.g. 1/50 sec. For example, commercially available DMDs can reach speeds of 10,000 frames per second. If 24 two-dimensional frames are used to create colour and grey-scale effects and a 3D image refresh rate of 50 Hz is required, it is possible to create eight different image planes 40a, 40b, 45a, 45b in the imaging volume 44, 49.

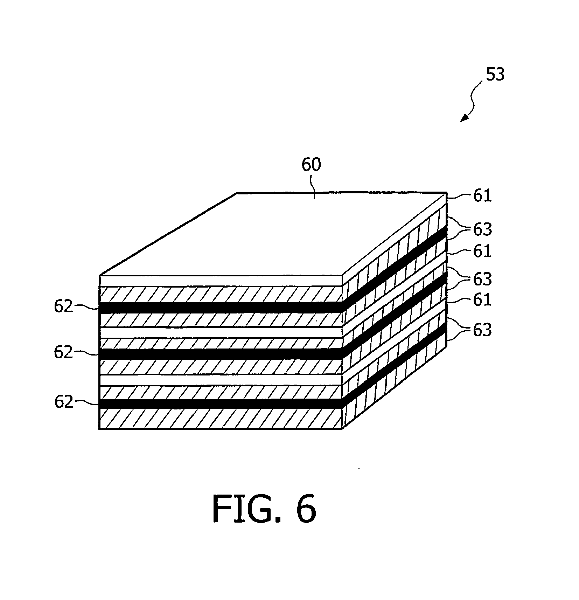

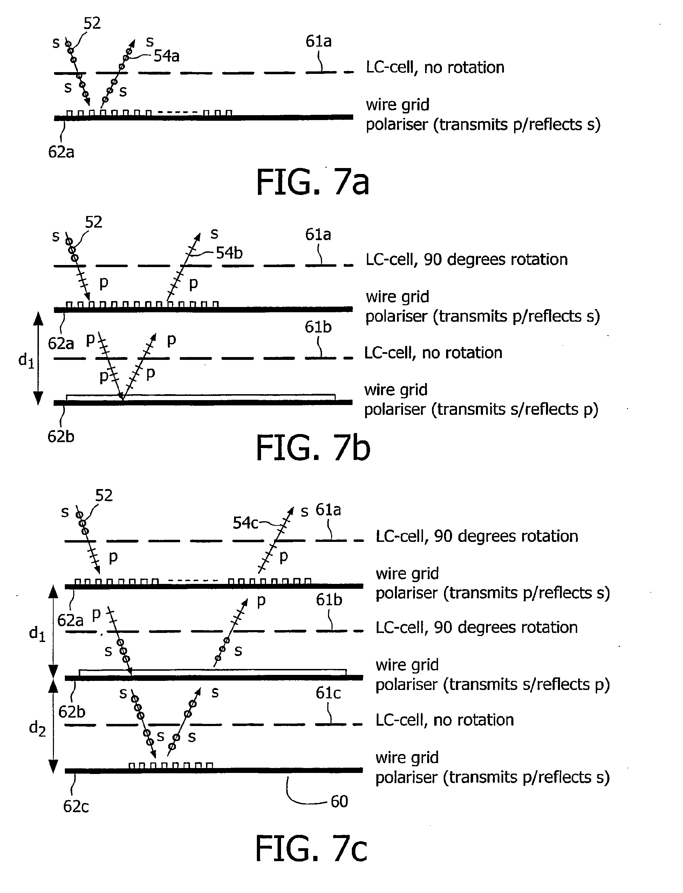

With reference to figures 6 and 7, there is shown an optical path length adjuster 53 according to a preferred arrangement of the present invention. The optical path length adjuster 53 is based on polarising switches 61 and reflective polarisers 62.

In preferred arrangements the switches 61 and polarisers 62 are arranged in alternating sequence to form a layered stack 60. There is preferably one polarisation switch 61 for each reflective polariser 62 within the stack 60. The expression 'polarisation switch' is used herein to encompass any suitable device for selecting as output a specific polarisation state, e.g. a polarisation rotator that can be switched on and off. The polarisation switch 61 may be a single cell liquid crystal panel with a twisted nematic 90 degree structure or a ferro-electric effect cell which allows a higher switching speed. The polarisation switch 61 generally provides a polarised optical output in one of two possible polarisation states, according to an applied electric field.

The expression 'reflective polariser' is used herein to encompass any suitable device that transmits light with one polarisation and reflects light with the other (orthogonal) polarisation. Examples of reflective polarisers include, but are not limited to, cholesteric polarisers, wire grid polarisers and reflective display films, such as Vikuiti^{tm} film manufactured by 3M (www.3m.com). The former is intended for use with circularly polarised light, while the latter two are for use with linearly polarised light.

According to the invention, the reflective polariser 62 is a wire grid polariser 62a, 62b, 63c. Wire grid polarisers 62a, 62b, 63c have been in use for some time in the microwave region of the electromagnetic spectrum, however, recently wire grid polarisers 62a, 62b, 63c for use in the visible region have been introduced commercially by a company called Moxtek (http://www.moxtek.com). The theory behind the wire grid polarisers 62a, 62b, 63c is based on electromagnetic induction and wave interference, and is summarised below.

The function of the wire grid is to allow a light beam incident on the parallel wires having a polarisation state orthogonal to the direction of the wires to be transmitted through the grid. This arises since the electric field of the light beam being orthogonal to the wires cannot generate a significant current in the wires. However, an incident light beam having a polarisation state parallel to the direction of the wires can generate a significant current in the wires to excite electrons in the wires so as to radiate light in both forward and rearward directions. The forward radiated light cancels the light moving in the forward direction and the rearward radiated light emerges as a reflected wave.

In preferred arrangements, the wire grid polarisers 62a, 62b, 63c are arranged in the stack 60 so as to have parallel planes and such that the direction of the wires are orthogonal to the direction of the wires of a preceding wire grid polariser e.g. 62a and 62b.

Alternatively, in other preferred arrangements, the wire grid polarisers 62a, 62b, 63c are arranged in the stack 60 such that the direction of the wires are parallel to the direction of the wires of a preceding wire grid polariser.

The switches 61 and polarisers 62 can preferably be mounted on a transparent substrate 63 for stability and support, with the switch/substrate combination 61, 63 forming one type of layer and the polariser/substrate 62, 63 forming another type of layer. The substrate 63 can be any suitable rigid and transparent material having a low coefficient of thermal expansion and includes, but is not limited to, glass and Perspex. Preferably, the two types of layers in the stack 60 can either be in contact with adjacent layers or else be spaced apart and separated by an intervening medium such as, but not limited to, air, vacuum or other transparent medium.

Any suitable adhesive or bonding agent which is transparent when set (i.e. dry) may be used to bond the layers in the stack 60. Alternatively, the layers of the stack may be held together by any suitable mechanical device which operates so as to either permanently or removeably clamp the layers securely together.

In arrangements in which the reflective polariser 62 is a reflective film, the film typically includes an adhesive layer enabling simple adhesion of the polariser to substrates 63 in the stack 60.

In preferred arrangements the stack 60 is constructed with layers which are bonded to each other since the stack 60 is easier to handle and more robust than a separated layer stack. Additionally, the manufacture of a bonded layer stack is easier since the stack can be fabricated as a single device. Hereinafter references to 'stack' are taken to refer to both bonded and separated layer stack arrangements, however it is to be understood that the exemplary arrangement is directed to a bonded layer stack 60.

The stack 60 has a face layer which preferably comprises a polarisation switch. Light is input to the stack 60 along an input optical path 52 which enters the stack 60 through the face layer. The lowest layer in the stack 60 is the base layer which operates so as to always reflect incident light. Preferably this is a plane mirror, but may alternatively be a reflective polariser 62 provided the polarisation state of the incident light on that layer is selected such that reflection will always occur.

Referring to figure 7, there is shown a schematic diagram of an exemplary stack arrangement showing possible optical paths within the stack 60. In this arrangement, the wire grid polarisers 62a, 62b, 62c are arranged so as to have alternating orthogonal wire directions. By way of example, in figure 7a let us assume that we start with an input beam of polarised light on input path 52, for instance with polarisation state S (shown as circles on the input path, the circles denoting the electric field vector of the light is normal to the plane of the page). By means of the polarisation switch 61 a, it is possible to determine the polarisation state of the input beam i.e. to either change or maintain the polarisation state so as to select a preferred polarisation. In figure 7a the liquid crystal cell is switched off and so the input beam maintains a polarisation state S after passing through the cell. The wire grid polariser 62a is arranged so that the wires run in a direction which is normal to the plane of the page as shown.

Hence, since the input beam is S-polarised in the direction of the wires, the wire grid polariser 62a acts as a reflector and so the input beam is reflected back from the wire grid polariser 62a and emerges on the output optical path 54a. In this instance, the polarisation state of the incident beam is selected so as to correspond to the direction of the wires of the wire grid polariser 62a, thereby rendering this particular wire grid polariser 62a as the reflecting layer.

In figure 7b, if the first polarisation switch 61a is switched on, the S-polarised input light beam will be converted to P-polarised after passing through the cell 61a (as shown by short parallel marks on the input path, the marks denoting the electric field vector of the light is in the plane of the page). Since the wire grid polariser 62a is arranged as before, with the wires normal to the plane of the page, the P-polarised light is transmitted by the wire grid polariser 62a. As the second liquid crystal cell 61 b is switched off, the polarisation state of the transmitted beam is maintained. The transmitted beam passes through the cell 61 b and is incident on the second wire grid polariser 62b in the stack 60. However, since the wire grid polarisers are arranged so that each sequential wire grid polariser is orthogonal with respect to the preceding one, the polarisation state of the transmitted light beam in this instance is parallel to the wires.

Hence, the second wire grid polariser 62b acts as a reflector and so the transmitted beam is reflected back from the second wire grid polariser 62b, passing through the layers 61 b, 62a, 61 a and emerging on the output optical path 54b. In this instance, the polarisation state of the transmitted beam is selected so as to correspond to the direction of the wires of the second wire grid polariser 62b, thereby rendering this particular wire grid polariser 62b as the reflecting layer. Clearly, this time the input light beam traverses the stack 60 to a greater depth d₁, thereby varying the optical path length between the input optical path 52 and the output optical path 54b by ≈2d₁, relative to the first example.

In figure 7c, the example is the same as in figure 7b up to the point where the P-polarised beam transmitted by the first wire grid polariser 62a is incident on the second liquid crystal cell 61 b. Here, the second liquid crystal cell 61b is switched on, so the polarisation state of the transmitted beam is changed from P-polarised to S-polarised. The second wire grid polariser 62b is arranged such that incident S-polarised light is transmitted, so the S-polarised beam passes through the second wire grid polariser 62b. A third liquid crystal cell 61c is switched off, so the polarisation state of the S-polarised transmitted beam is maintained as the beam passes through the cell 61c. However, the third wire grid polariser 62c is arranged so that the wires run in a direction normal to the page as shown and so the polarisation state of the transmitted light beam is parallel to the wire direction.

Hence, the third wire grid polariser 62c acts as a reflector and so the transmitted beam is reflected back from the third wire grid polariser 62c, passing through the layers 61c, 62b, 61b, 62a, 61a and emerging on the output optical path 54c. in this instance, the polarisation state of the transmitted beam is selected so as to correspond to the direction of the wires of the third wire grid polariser 62c, thereby rendering this particular wire grid polariser 62c as the reflecting layer. In this example the input light beam traverses the stack to a depth d₁ + d₂, thereby varying the effective optical path length between the input optical path 52 and the output optical path 54 by a distance ≈2(d₁ + d₂), which is further than the optical path length of the second example.

It will be appreciated that the distance travelled by an input light beam in passing between two layers spaced by a distance d will be somewhat dependent on the angle of incidence of the beam. Only for normal incidence will the distance travelled be exactly equal to d. For more oblique angles of incidence the distance travelled will be > d. Hence, in the previous example in which reflection occurs, the effective optical path length between the input optical path 52 and the output optical path 54 would be equal to 2(d₁ + d₂) for normal incidence and would be > 2(d₁ + d₂) for increasing angles of incidence.

If the wire grid polarisers 62a, 62b, 62c had been arranged such that the direction of the wires were parallel to the direction of the wires of a preceding wire grid polariser, the operation of the polarisation switches 61 a, 61 b, 61 c must be adapted accordingly. In either case, the function of the polarisation switches 61 a, 61 b, 61 c is to select the polarisation state of a beam incident on a particular wire grid polariser, so that the beam is either transmitted or reflected dependent on the direction of the wires.

In arrangements in which the reflective polarisers in the stack 60 are cholesteric polarisers, the polarisation switches 61a, 61b, 61c provide either 180 degrees or 0 degrees retardation, either changing the handedness of the light beam or else leaving it unchanged at each respective polarisation switch layer.

As a consequence of allowing the input light beam to be successively transmitted through further layers of the stack 60, the effective optical path length can be increased between the input optical path 52 and the output optical path 54. The effective optical path length can be varied by simply selecting a desired depth within the stack 60 at which reflection is to occur from a particular reflective polariser 62. All of this can be achieved without any moving parts.

It will be appreciated that the lengths of available optical paths within a particular stack 60 can be pre-selected by choosing the thicknesses of the substrates 63 supporting the polarisation switches 61 and reflective polarisers 62. In preferred arrangements, the thicknesses of the substrates 63 may be the same or alternatively may be varied. Hence, multiple effective optical path lengths within a stack 60 are available by preferably selecting particular combinations of layers having the same or varying thicknesses. Due to the nature of the stack 60 and the operation of the reflective polarisers 62, there is one output optical path 54a, 54b, 54c for each reflective polariser 62a, 62b, 62c. Each successive reflective polariser 62a, 62b, 62c gives rise to a respective output optical path 54a, 54b, 54c which is laterally displaced and parallel to the output optical paths 54a, 54b, 54c of the other reflective polarisers 62a, 62b, 62c. This condition does not apply to normal incidence of the input beam however, where output paths are coincident.

In other preferred arrangements, the lengths of available optical paths within a particular stack 60 can be pre-selected by choosing the refractive indices of the substrates 63. The refractive indices of the substrates 63 can preferably be the same for all substrates 63 or else be different for different substrates 63. By selecting a particular refractive index for a particular substrate 63, the input light beam can be refracted so as to traverse a longer optical path through the substrate 63, relative to another substrate 63 of the same thickness but different refractive index.

It will be appreciated that, in preferred arrangements, the base layer will only ever receive incident light if each reflective polariser 62 in the stack 60 transmits the light incident on it, or put another way, if none of the reflective polarisers 62 are selected to reflect the incident light.

By means of the example adjuster in figure 7, we can create three image planes 55 in a volumetric display device 50. With each successive reflective polariser 62 in the stack 60 an additional image plane may preferably be created.

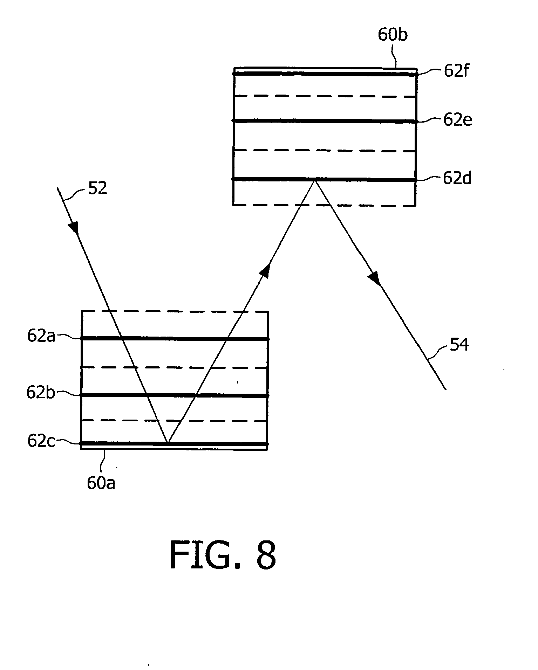

Further planes 55 can be created by means of more than one adjuster 53 in a cascade arrangement, as shown in figure 8. This is one example of a preferred cascade arrangement comprising two stacks 60a, 60b having opposing face layers. By selecting a particular combination of reflective polariser in the first stack and reflective polariser in the second stack, multiple effective optical lengths can be selected through the cascade arrangement. In the example illustrated, one of the many optical paths in the arrangement is defined by selecting the third reflective polariser 62c of the first stack 60a and the first reflective polariser 62d of the second stack 60b to each be reflective. By selecting the required polarisation states of an input beam as the beam traverses the arrangement, the beam can reflect from the selected layers and follow the desired optical path as shown. It will be appreciated that any number of adjusters 53 can be cascaded in this way to provide further effective optical path lengths, leading to further image planes 55.

It will be appreciated that the stacks 60a, 60b in a cascade arrangement need not be identical in terms of number of layers, substrate thicknesses and refractive indices.

The different effective optical paths might result in brightness differences due to absorption coefficients of the polarisation switches 61 and/or reflective polarisers 62. This absorption could be compensated for by the intensity of light engine display 51, e.g. corrected electronically in a video signal supplied thereto.

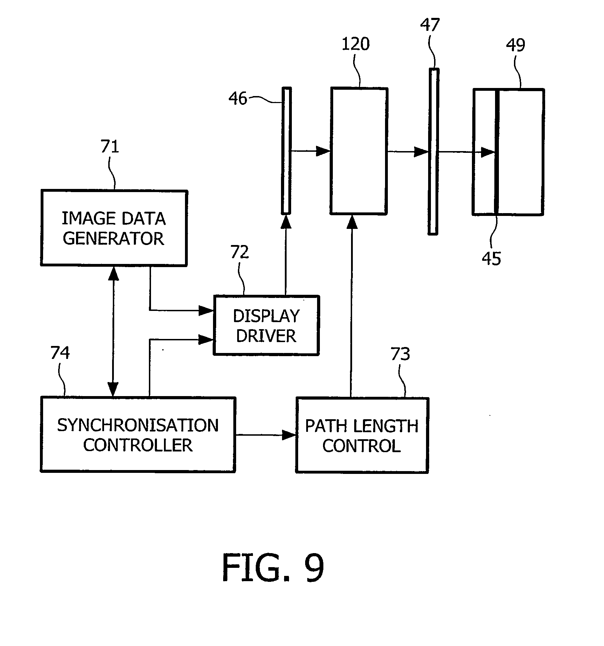

With reference to figure 9 a schematic view of an overall volumetric image display device using the optical path length adjusters described herein, together with control system, is shown. The path length adjuster 120 (e.g. adjuster 53 as described earlier) interposed between the 2D display panel 46 and focusing element 47 is controlled by path length control circuit 73. Path length control circuit provides electrical drive signals to each of the polarisation switches, e.g. 61a, 61 b, 61c. A display driver 72 receives 2D frame image data from image generator 71. Display of the succession of 2D images is synchronised with the path length controller operation by way of a synchronisation circuit 74.

Although a principal and important use for the path length adjuster as described herein is in the application of a volumetric three dimensional image display device, it will be recognised that the adjuster may have use in other optical instruments and devices, where it is necessary or desirable to facilitate the electro-optical switching of an optical path length between two optical elements. Such an arrangement avoids the need for moving parts as the path length can be varied by way of electrical control signals to each of the polarisation switches.

Other embodiments are intentionally within the scope of the accompanying claims.

## Claims

1. An optical path length adjuster (53) for varying an optical path length between an input optical path (52) and an output optical path (54), comprising: a plurality of first optical elements (61) and second optical elements (62) arranged in alternating sequence along an optical path, each first optical element for determining a polarisation state of a light beam passing through that element and each second optical element for selectively transmitting or reflecting a light beam incident on that element depending on the selected polarisation state of the incident light beam, wherein the optical path length traversed by an input beam on the optical path can be varied by selecting a particular second optical element at which reflection of the input beam is to occur, the reflected input beam emerging along the output optical path,
**characterised in that** the second optical element (62) comprises a wire grid polariser (62a, 62b, 62c), and **in that** the first optical element (61) comprises a polarising switch (61a, 61b, 61c) in the form of a liquid crystal cell, capable of changing the polarisation state of a light beam passing through the element.

2. The adjuster of claim 1, further comprising a plurality of different spacings between adjacent first (61) and second optical elements (62).

3. The adjuster of claim 2, wherein the spacings between adjacent first (61) and second (62) optical elements have different thicknesses depending on the optical path lengths required along the optical path.

4. The adjuster of claim 2 or claim 3, wherein the spacings between adjacent first (61) and second (62) optical elements are occupied by spacing media.

5. The adjuster of claim 4, wherein the spacing media between adjacent first (61) and second (62) optical elements have different refractive indices depending on the optical path lengths required along the optical path.

6. The adjuster of claim 4 or claim 5, wherein the spacing media between adjacent first (61) and second (62) optical elements includes glass substrates (63).

7. The adjuster of any preceding claim, wherein the plurality of first optical elements (61) and second optical elements (62) are arranged in a layered stack configuration (60).

8. The adjuster of claim 8, wherein the polarising switch (61 a, 61 b, 61 c) is supported by a glass substrate (63).

9. The adjuster of any preceding claim, wherein the wire grid polariser (62a, 62b, 62c) is supported by a glass substrate (63).

10. The adjuster of any preceding claim, wherein consecutive wire grid polarisers (62a, 62b, 62c) are arranged so as to have parallel planes and such that the direction of the wires are orthogonal to the direction of the wires of the preceding wire grid polariser.

11. The adjuster of claim 7, wherein the input beam enters the stack (60) through a face layer of the stack, the face layer being a said first optical element (61).

12. The adjuster of claim 11, wherein the stack (60) has a base layer which is reflective only.

13. The adjuster of claim 12, wherein the base layer is a plane mirror.

14. The adjuster of claim 12, wherein the output beam leaves the stack (60) through the face layer, the output beam resulting from reflection by either a selected second optical element (62) or the base layer.

15. The adjuster of claim 1, wherein the spacing (d1, d2) between sequential second optical elements (62) determines the possible optical path lengths along the optical path.

16. The adjuster of any preceding claim combined with at least one further optical path length adjuster of any preceding claim in a cascade formation, such that the output optical path (54) of the first said optical path length adjuster (53) forms the input path (52) of a successive said further optical path length adjuster.

17. A display device for generating a three-dimensional volumetric image, comprising:
a two-dimensional image display panel (41,46) for generating a two-dimensional image;
a first focusing element (42,47) for projecting the two-dimensional image to a virtual image (40,45) in an imaging volume (44,49) ; and
means (43,48, 53) for altering the effective optical path length between the display panel and the projecting first focusing element so as to alter the position of the virtual image within the imaging volume, wherein the means for altering the effective optical path length comprises the optical path length adjuster according to any one of claims 1 to 16.

18. A method for varying an optical path length between an input optical path (52) and an output optical path (54) of an optical path length adjuster (53), comprising the steps of:
providing an input beam of light on the input optical path and passing it into a plurality of first optical elements (61) and second optical elements (62) arranged in alternating sequence along the optical path;
determining a polarisation state of the input beam at each first optical element through which the beam passes; and
either transmitting or reflecting the beam at each second optical element (62) on which the beam is incident, depending on the selected polarisation state of the incident beam; wherein the optical path length traversed by the input beam on the optical path can be varied by selecting a particular second optical element (62) at which reflection of the input beam is to occur, the reflected input beam emerging along the output optical path,
**characterised in that** the second optical element (62) comprises a wire grid polariser (62a, 62b, 62c) and the preferred polarisation state is selected so as to be parallel to the direction of the wires if the beam is to be reflected and orthogonal to the direction of the wires if the beam is to be transmitted, and **in that** the first optical elements comprise liquid crystal cells.

19. The method of claim 18, in which the determining step either changes or maintains the polarisation state of the beam, so as to select a preferred polarisation state.

20. The method of claim 19, in which the polarisation state of the beam is changed by switching a polarising switch(61 a, 61 b, 61 c) in the first optical element (61) from one polarising state to another polarising state.

21. The method of claim 19, in which a preferred polarisation state is selected for each second optical element (62) on which the beam is incident, so as to correspond to a polarisation state which is either transmitted or reflected by each particular second optical element (62).

22. The method of any one of claims 18 to 21, in which consecutive second optical elements (62) are arranged so that the direction of the wires of the wire grid polariser (62a, 62b, 62c) are orthogonal to the direction of the wires of a preceding wire grid polariser.

23. The method of any one of claims 18 to 22, in which the optical path length is dependent on at least the number of second optical elements (62) which transmit the beam and the spacings(di, d2) therebetween.

24. The method of any one of claims 18 to 23, in which arranging the plurality of first optical elements (61) and second optical elements (62) in alternating sequence produces a layered stack configuration (60), having a face layer corresponding to a first optical element and a base layer which only reflects.

25. The method of claim 24, in which the arranging places the layers in contact with each other or holds the layers in spaced relation.

26. The method of claim 24, in which the optical path length depends on at least the position of the layer within the stack which includes the particular second optical element (62) selected to reflect the beam.

27. The method of claim 26, in which the beam is reflected from the base layer if each of the second optical elements (62) transmits the beam.

28. The method of any one of the claims 18 to 27 further including passing light from the output optical path (54,54a, 54b, 54c) to an input optical path (52) of a downstream optical path length adjuster and repeating the steps for adjusting the optical path length.

29. The method of claim 28 further including the step of selecting different optical path lengths within each said optical path length adjuster.

30. A method for generating a three-dimensional volumetric image, comprising the steps of:
generating a two-dimensional image on a two-dimensional image display panel (41,46) ;
projecting the two-dimensional image to a virtual image (40,45) in an imaging volume (44,49) with a first focusing element (42,47) ;
and altering the optical path length between the display panel and the projecting focusing element so as to vary the position of the virtual image within the imaging volume according to the method of any one of claims 20 to 29.

## Patentansprüche

1. Einstellvorrichtung (53) für die optische Weglänge zum Variieren einer optischen Weglänge zwischen einem optischen Eintrittsweg (52) und einem optischen Austrittsweg (54) mit: mehreren ersten optischen Elementen (61) und zweiten optischen Elementen (62), die in alternierender Folge entlang einem optischen Weg angeordnet sind, wobei jedes erste optische Element zur Bestimmung eines Polarisationszustands eines durch dieses Element hindurchgehenden Lichtstrahls und jedes zweite optische Element zur selektiven Übertragung oder Reflexion eines auf dieses Element auffallenden Lichtstrahls von dem ausgewählten Polarisationszustand des auffallenden Lichtstrahls abhängig sind, wobei die von einem Eingangsstrahl auf dem optischen Weg durchquerte, optische Weglänge durch Auswählen eines bestimmten, zweiten optischen Elements, an dem eine Reflexion des Eingangsstrahls erfolgen soll, variiert werden kann, wobei der reflektierte Eingangsstrahl entlang dem optischen Austrittsweg austritt,
**dadurch gekennzeichnet, dass** das zweite optische Element (62) einen Drahtgitter-Polarisator (62a, 62b, 62c) und das erste optische Element (61) einen Polarisationsschalter (61a, 61b, 61c) in Form einer Flüssigkristallzelle aufweist, der den Polarisationszustand eines durch das Element hindurchgehenden Lichtstrahls ändern kann.

2. Einstellvorrichtung nach Anspruch 1, welche weiterhin mehrere verschiedene Abstände zwischen aneinander grenzenden, ersten (61) und zweiten (62) optischen Elementen aufweist.

3. Einstellvorrichtung nach Anspruch 2, wobei die Abstände zwischen aneinander grenzenden ersten (61) und zweiten (62) optischen Elementen in Abhängigkeit der entlang dem optischen Weg erforderlichen, optischen Weglängen verschiedene Dicken aufweisen.

4. Einstellvorrichtung nach Anspruch 2 oder 3, wobei die Abstände zwischen aneinander grenzenden ersten (61) und zweiten (62) optischen Elementen durch Abstandsmedien ausgefüllt werden.

5. Einstellvorrichtung nach Anspruch 4, wobei die Abstandsmedien zwischen aneinander grenzenden ersten (61) und zweiten (62) optischen Elementen in Abhängigkeit der entlang dem optischen Weg erforderlichen, optischen Weglängen verschiedene Brechungsindizes aufweisen.

6. Einstellvorrichtung nach Anspruch 4 oder 5, wobei die Abstandsmedien zwischen aneinander grenzenden ersten (61) und zweiten (62) optischen Elementen Glassubstrate (63) umfassen.

7. Einstellvorrichtung nach einem der vorangegangenen Ansprüche, wobei die mehreren ersten optischen Elemente (61) und zweiten optischen Elemente (62) in einer Schichtenstapelkonfiguration (60) angeordnet sind.

8. Einstellvorrichtung nach Anspruch 8, wobei der Polarisationsschalter (61 a, 61b, 61c) von einem Glassubstrat (63) getragen wird.

9. Einstellvorrichtung nach einem der vorangegangenen Ansprüche, wobei der Drahtgitter-Polarisator (62a, 62b, 62c) von einem Glassubstrat (63) getragen wird.

10. Einstellvorrichtung nach einem der vorangegangenen Ansprüche, wobei aufeinander folgende Drahtgitter-Polarisatoren (62a, 62b, 62c) so angeordnet sind, dass sie parallele Ebenen aufweisen, und dass die Richtung der Drähte orthogonal zu der Richtung der Drähte des vorhergehenden Drahtgitter-Polarisators verläuft.

11. Einstellvorrichtung nach Anspruch 7, wobei der Eingangsstrahl durch eine Frontschicht des Schichtenstapels in den Schichtenstapel (60) eintritt, wobei die Frontschicht das erste optische Element (61) ist.

12. Einstellvorrichtung nach Anspruch 11, wobei der Schichtenstapel (60) eine Basisschicht aufweist, welche nur reflektiv ist.

13. Einstellvorrichtung nach Anspruch 12, wobei die Basisschicht ein ebener Spiegel ist.

14. Einstellvorrichtung nach Anspruch 12, wobei der Ausgangsstrahl durch die Frontschicht aus dem Schichtenstapel (60) austritt, wobei der Ausgangsstrahl aus Reflexion von entweder einem ausgewählten, zweiten optischen Element (62) oder der Basisschicht resultiert.

15. Einstellvorrichtung nach Anspruch 1, wobei der Abstand (d1, d2) zwischen sequentiellen, zweiten optischen Elementen (62) die möglichen optischen Weglängen entlang dem optischen Weg bestimmt.

16. Einstellvorrichtung nach einem der vorangegangenen Ansprüche in Verbindung mit mindestens einer weiteren Einstellvorrichtung für die optische Weglänge nach einem der vorangegangenen Ansprüche, welche kaskadenförmig angeordnet ist, so dass der optische Austrittsweg (54) der ersten Einstellvorrichtung (53) für die optische Weglänge den Eintrittsweg (52) einer nachfolgenden, weiteren Einstellvorrichtung für die optische Weglänge bildet.

17. Anzeigeeinrichtung zur Erzeugung eines dreidimensionalen Volumenbildes mit:
einem zweidimensionalen Bildanzeigepanel (41,46), um ein zweidimensionales Bild zu erzeugen,
einem ersten Fokussierelement (42,47), um das zweidimensionale Bild in ein virtuelles Bild (40,45) in einem Abbildungsvolumen (44,49) zu projizieren, sowie
Mitteln (43,48,53), um die effektive, optische Weglänge zwischen dem Anzeigepanel und dem projizierenden, ersten Fokussierelement so zu verändern, dass die Position des virtuellen Bildes innerhalb des Abbildungsvolumens verändert wird, wobei die Mittel zur Änderung der effektiven, optischen Weglänge die Einstellvorrichtung für die optische Weglänge nach einem der Ansprüche 1 bis 16 umfassen.

18. Verfahren zum Variieren einer optischen Weglänge zwischen einem optischen Eintrittsweg (52) und einem optischen Austrittsweg (54), welches die folgenden Schritte umfasst:
Erzeugung eines Eingangslichtstrahls auf dem optischen Eintrittsweg und Eintreten desselben in mehrere erste optische Elemente (61) und zweite optische Elemente (62), die in alternierender Folge entlang dem optischen Weg angeordnet sind,
Bestimmen eines Polarisationszustands des Eingangsstrahls an jedem ersten optischen Element, durch welches der Strahl hindurchgeht, sowie
entweder Übertragen oder Reflektieren des Strahls an jedem zweiten optischen Element (62), auf welches der Strahl auffällt, in Abhängigkeit des ausgewählten Polarisationszustands des auffallenden Strahls, wobei die von dem Eingangsstrahl auf dem optischen Weg durchlaufene, optische Weglänge durch Auswählen eines bestimmten, zweiten optischen Elements (62), an welchem eine Reflexion des Eingangsstrahls erfolgen soll, variiert werden kann, wobei der reflektierte Eingangsstrahl entlang dem optischen Austrittsweg austritt,
**dadurch gekennzeichnet, dass** das zweite optische Element (62) einen Drahtgitter-Polarisator (62a, 62b, 62c) aufweist und der bevorzugte Polarisationszustand so ausgewählt wird, dass er parallel zu der Richtung der Drähte ist, wenn der Strahl zu reflektieren ist, und orthogonal zu der Richtung der Drähte ist, wenn der Strahl zu übertragen ist, und dass die ersten optischen Elemente Flüssigkristallzellen aufweisen.

19. Verfahren nach Anspruch 18, wobei gemäß dem Bestimmungsschritt der Polarisationszustand des Strahls entweder geändert oder aufrechterhalten wird, um einen bevorzugten Polarisationszustand auszuwählen.

20. Verfahren nach Anspruch 19, wobei der Polarisationszustand des Strahls durch Schalten eines Polarisationsschalters (61a, 61b, 61c) in dem ersten optischen Element (61) von einem Polarisationszustand in einen anderen Polarisationszustand geändert wird.

21. Verfahren nach Anspruch 19, wobei ein bevorzugter Polarisationszustand für jedes zweite optische Element (62), auf welches der Strahl auffällt, ausgewählt wird, um einem Polarisationszustand zu entsprechen, der von jedem bestimmten zweiten optischen Element (62) entweder übertragen oder reflektiert wird.

22. Verfahren nach einem der Ansprüche 18 bis 21, wobei aufeinander folgende, zweite optische Elemente (62) so angeordnet sind, dass die Richtung der Drähte des Drahtgitter-Polarisators (62a, 62b, 62c) orthogonal zu der Richtung der Drähte eines vorhergehenden Drahtgitter-Polarisators verläuft.

23. Verfahren nach einem der Ansprüche 18 bis 22, wobei die optische Weglänge zumindest von der Anzahl der zweiten optischen Elemente (62), welche den Strahl übertragen, und den Abständen (d1, d2) zwischen diesen abhängig ist.

24. Verfahren nach einem der Ansprüche 18 bis 23, wobei durch Anordnen der mehreren ersten optischen Elemente (61) und zweiten optischen Elemente (62) in alternierender Folge eine Schichtenstapelkonfiguration (60) erzeugt wird, welche eine Frontschicht entsprechend einem ersten optischen Element und eine Basisschicht, die ausschließlich reflektiert, umfasst.

25. Verfahren nach Anspruch 24, wobei die Schichten durch das Anordnen in Kontakt miteinander gebracht oder in einem Abstandsverhältnis gehalten werden.

26. Verfahren nach Anspruch 24, wobei die optische Weglänge von zumindest der Position der Schicht innerhalb des Schichtenstapels, der das bestimmte zweite optische Element (62) umfasst, welches so ausgewählt wird, dass es den Strahl reflektiert, abhängig ist.

27. Verfahren nach Anspruch 26, wobei der Strahl von der Basisschicht reflektiert wird, wenn jedes der zweiten optischen Elemente (62) den Strahl überträgt.

28. Verfahren nach einem der Ansprüche 18 bis 27, wonach weiterhin Licht von dem optischen Austrittsweg (54, 54a, 54b, 54c) zu einem optischen Eintrittsweg (52) einer nachgeschalteten Einstellvorrichtung für die optische Weglänge geleitet wird und die Schritte zur Einstellung der optischen Weglänge wiederholt werden.

29. Verfahren nach Anspruch 28, welches weiterhin den Schritt des Auswählens verschiedener optischer Weglängen innerhalb jeder Einstellvorrichtung für die optische Weglänge umfasst.

30. Verfahren zur Erzeugung eines dreidimensionalen Volumenbildes , welches die folgenden Schritte umfasst:
Erzeugen eines zweidimensionalen Bildes auf einem zweidimensionalen Bildanzeigepanel (41,46),
Projizieren des zweidimensionalen Bildes in ein virtuelles Bild (40,45) in einem Abbildungsvolumen (44,49) mit einem ersten Fokussierelement (42,47) sowie
Änderung der optischen Weglänge zwischen dem Anzeigepanel und dem projizierenden Fokussierelement, um die Position des virtuellen Bildes innerhalb des Abbildungsvolumens gemäß dem Verfahren nach einem der Ansprüche 20 bis 29 zu verändern.

## Revendications

1. Dispositif de réglage de longueur de chemin optique (53) pour faire varier une longueur de chemin optique entre un chemin optique d'entrée (52) et un chemin optique de sortie (54), comprenant : une pluralité de premiers éléments optiques (61) et de deuxièmes éléments optiques (62) agencés successivement en alternance le long d'un chemin optique, chaque premier élément optique pour déterminer un état de polarisation d'un faisceau de lumière traversant cet élément et chaque deuxième élément optique pour transmettre ou réfléchir sélectivement un faisceau de lumière incident sur cet élément en fonction de l'état de polarisation sélectionné du faisceau de lumière incident, dans lequel on peut faire varier la longueur de chemin optique parcourue par un faisceau d'entrée sur le chemin optique en sélectionnant un deuxième élément optique particulier au niveau duquel la réflexion du faisceau d'entrée doit avoir lieu, le faisceau d'entrée réfléchi émergeant le long du chemin optique de sortie ;
**caractérisé en ce que** le deuxième élément optique (62) comprend un polariseur à grille de fils (62a, 62b, 62c), et **en ce que** le premier élément optique (61) comprend un commutateur de polarisation (61 a, 61 b, 61 c) sous la forme d'une cellule à cristaux liquides, capable de modifier l'état de polarisation d'un faisceau de lumière traversant l'élément.

2. Dispositif de réglage suivant la revendication 1, comprenant en outre une pluralité d'écartements différents entre un premier (61) et un deuxième (62) éléments optiques adjacents.

3. Dispositif de réglage suivant la revendication 2, dans lequel les écartements entre un premier (61) et un deuxième (62) éléments optiques adjacents ont des épaisseurs différentes en fonction des longueurs de chemin optique requises le long du chemin optique.

4. Dispositif de réglage suivant la revendication 2 ou 3, dans lequel les écartements entre un premier (61) et un deuxième (62) éléments optiques adjacents sont occupés par des milieux d'écartement.

5. Dispositif de réglage suivant la revendication 4, dans lequel les milieux d'écartement entre un premier (61) et un deuxième (62) éléments optiques adjacents ont des indices de réfraction différents en fonction des longueurs de chemin optique requises le long du chemin optique.

6. Dispositif de réglage suivant la revendication 4 ou 5, dans lequel les milieux d'écartement entre un premier (61) et un deuxième (62) éléments optiques adjacents incluent des substrats de verre (63).

7. Dispositif de réglage suivant l'une quelconque des revendications précédentes, dans lequel la pluralité de premiers éléments optiques (61) et de deuxièmes éléments optiques (62) sont agencés en une configuration de pile de couches (60).

8. Dispositif de réglage suivant la revendication 8, dans lequel le commutateur de polarisation (61 a, 61b, 6 1 c) est supporté par un substrat de verre (63).

9. Dispositif de réglage suivant l'une quelconque des revendications précédentes, dans lequel le polariseur à grille de fils (62a, 62b, 62c) est supporté par un substrat de verre (63).

10. Dispositif de réglage suivant l'une quelconque des revendications précédentes, dans lequel des polariseurs à grille de fils consécutifs (62a, 62b, 62c) sont agencés de manière à avoir des plans parallèles et de sorte que la direction des fils soit orthogonale par rapport à la direction des fils du polariseur à grille de fils précédent.

11. Dispositif de réglage suivant la revendication 7, dans lequel le faisceau d'entrée pénètre la pile (60) à travers une couche de face de la pile, la couche de face étant un desdits premiers éléments optiques (61).

12. Dispositif de réglage suivant la revendication 11, dans lequel la pile (60) comporte une couche de base qui est uniquement réflective.

13. Dispositif de réglage suivant la revendication 12, dans lequel la couche de base est un miroir plan.

14. Dispositif de réglage suivant la revendication 12, dans lequel le faisceau de sortie sort de la pile (60) à travers la couche de face, le faisceau de sortie résultant de la réflexion soit par un deuxième élément optique (62) sélectionné, soit par la couche de base.

15. Dispositif de réglage suivant la revendication 1, dans lequel l'écartement (d₁, d₂) entre des deuxièmes éléments optiques (62) successifs détermine les longueurs de chemin optique possibles le long du chemin optique.

16. Dispositif de réglage suivant l'une quelconque des revendications précédentes combiné à au moins un autre dispositif de réglage de longueur de chemin optique suivant l'une quelconque des revendications précédentes en une formation en cascade, de sorte que le chemin optique de sortie (54) du premier dit dispositif de réglage de longueur de chemin optique (53) forme le chemin d'entrée (52) d'un dit autre dispositif de réglage de longueur de chemin optique successif.

17. Dispositif d'affichage pour générer une image volumétrique tridimensionnelle, comprenant :
un panneau d'affichage d'image bidimensionnelle (41, 46) pour générer une image bidimensionnelle ;
un premier élément de focalisation (42, 47) pour projeter l'image bidimensionnelle en une image virtuelle (40, 45) dans un volume d'imagerie (44, 49), et
des moyens (43, 48, 53) pour modifier la longueur de chemin optique effective entre le panneau d'affichage et le premier élément de focalisation de projection de manière à modifier la position de l'image virtuelle dans le volume d'imagerie, dans lequel les moyens pour modifier la longueur de chemin optique effective comprennent le dispositif de réglage de longueur de chemin optique suivant l'une quelconque des revendications 1 à 16.

18. Procédé pour faire varier une longueur de chemin optique entre un chemin optique d'entrée (52) et un chemin optique de sortie (54) d'un dispositif de réglage de longueur de chemin optique (53), comprenant les étapes suivantes :
la fourniture d'un faisceau de lumière d'entrée sur le chemin optique d'entrée et le passage de celui-ci dans une pluralité de premiers éléments optiques (61) et de deuxièmes éléments optiques (62) agencés successivement en alternance le long du chemin optique ;
la détermination d'un état de polarisation du faisceau d'entrée au niveau de chaque premier élément optique que traverse le faisceau, et
soit la transmission, soit la réflexion du faisceau au niveau de chaque deuxième élément optique (62) sur lequel le faisceau est incident, en fonction de l'état de polarisation sélectionné du faisceau incident ; dans lequel on peut faire varier la longueur de chemin optique parcourue par le faisceau d'entrée sur le chemin optique en sélectionnant un deuxième élément optique (62) particulier au niveau duquel la réflexion du faisceau d'entrée doit avoir lieu, le faisceau d'entrée réfléchi émergeant le long du chemin optique de sortie;
**caractérisé en ce que** le deuxième élément optique (62) comprend un polariseur à grille de fils (62a, 62b, 62c) et l'état de polarisation préféré est sélectionné de manière à être parallèle à la direction des fils si le faisceau doit être réfléchi et orthogonal à la direction des fils si le faisceau doit être transmis, et **en ce que** les premiers éléments optiques comprennent des cellules à cristaux liquides.

19. Procédé suivant la revendication 18, dans lequel l'étape de détermination soit change, soit conserve l'état de polarisation du faisceau, de manière à sélectionner un état de polarisation préféré.

20. Procédé suivant la revendication 19, dans lequel l'état de polarisation du faisceau est modifié en commutant un commutateur de polarisation (61 a, 61b, 61 c) dans le premier élément optique (61) d'un état de polarisation à un autre état de polarisation.

21. Procédé suivant la revendication 19, dans lequel un état de polarisation préféré est sélectionné pour chaque second élément optique (62) sur lequel le faisceau est incident, de manière à correspondre à un état de polarisation qui est soit transmis, soit réfléchi par chaque deuxième élément optique (62) particulier.

22. Procédé suivant l'une quelconque des revendications 18 à 21, dans lequel des deuxièmes éléments optiques (62) consécutifs sont agencés de sorte que la direction des fils du polariseur à grille de fils (62a, 62b, 62c) est orthogonale à la direction des fils d'un polariseur à grille de fils précédent.

23. Procédé suivant l'une quelconque des revendications 18 à 22, dans lequel la longueur de chemin optique dépend au moins du nombre de deuxièmes éléments optiques (62) qui transmettent le faisceau et des écartements (d₁, d₂) entre ceux-ci.

24. Procédé suivant l'une quelconque des revendications 18 à 23, dans lequel l'agencement de la pluralité de premiers éléments optiques (61) et de deuxièmes éléments optiques (62) successivement en alternance produit une configuration de pile de couches (60), comportant une couche de face correspondant à un premier élément optique et une couche de base qui réfléchit uniquement.

25. Procédé suivant la revendication 24, dans lequel l'agencement place les couches en contact les unes avec les autres ou maintient les couches dans un rapport d'espacement.

26. Procédé suivant la revendication 24, dans lequel la longueur de chemin optique dépend au moins de la position de la couche dans la pile qui inclut le deuxième élément optique (62) particulier sélectionné pour réfléchir le faisceau.

27. Procédé suivant la revendication 26, dans lequel le faisceau est réfléchi par la couche de base si chacun des deuxièmes éléments optiques (62) transmet le faisceau.

28. Procédé suivant l'une quelconque des revendications 18 à 27 incluant en outre le passage de la lumière du chemin optique de sortie (54, 54a, 54b, 54c) à un chemin optique d'entrée (52) d'un dispositif de réglage de longueur de chemin optique en aval et la répétition des étapes pour régler la longueur de chemin optique.

29. Procédé suivant la revendication 28 incluant en outre l'étape de sélection de longueurs de chemin optique différentes dans chaque dit dispositif de réglage de longueur de chemin optique.

30. Procédé de génération d'une image volumétrique tridimensionnelle, comprenant les étapes suivantes :
la génération d'une image bidimensionnelle sur un panneau d'affichage d'image bidimensionnelle (41, 46) ;
la projection de l'image bidimensionnelle en une image virtuelle (40, 45) dans un volume d'imagerie (44, 49) avec un premier élément de focalisation (42, 47), et
la modification de la longueur de chemin optique entre le panneau d'affichage et l'élément de focalisation de projection de manière à faire varier la position de l'image virtuelle dans le volume d'imagerie selon le procédé suivant l'une quelconque des revendications 20 à 29.
